# EUROPÄISCHE PATENTANMELDUNG

(11) **EP 1 798 873 A1**
(43) Veröffentlichungstag der Anmeldung: **20.06.2007**
(21) Anmeldenummer: 05027544.5
(22) Anmeldetag: 15.12.2005
(51) Int. Cl.: H04B 7/26, H04Q 7/36

(54) **Verfahren zum Übertragen von Daten und/oder Signalisierungen über eine Funkschnittstelle in einem Funkkommunikationssystem über zumindest ein FDD-Frequenzband mittels einer TDD-basierten Teilnehmerstation sowie Teilnehmerstation und Netzeinrichtung**

(71) Anmelder: SIEMENS AKTIENGESELLSCHAFT, 80333 München (DE)
(72) Erfinder: Eichinger, Josef Martin, 85464 Neufinsing (DE); Schulz, Egon, Dr., 80993 München (DE)

(57) **Zusammenfassung**

Bei einem Verfahren zum Übertragen von Daten und/oder Signalisierungen über eine Funkschnittstelle (V) in einem Funkkommunikationssystem über zumindest ein FDD-Frequenzband (F1, F3) mittels einer Teilnehmerstation (MS, MS*), wobei die Teilnehmerstation (MS, MS*) ausgelegt ist für TDD- und FDD-Betrieb, werden für die Teilnehmerstation (MS, MS*) sowohl Ressourcen im zumindest einen FDD-Frequenzband (F1, F3) als auch in einem TDD-Frequenzband (F2) allokiert und das Übertragen von Daten und/oder Signalisierungen wird wahlweise über die im zumindest einen FDD-Frequenzband (F1, F3) allokierten Ressourcen oder die im TDD-Frequenzband (F2) allokierten Ressourcen durchgeführt.

## Beschreibung

Die Erfindung betrifft ein Verfahren zum Übertragen von Daten und/oder Signalisierungen über eine Funkschnittstelle in einem Funkkommunikationssystem über zumindest ein FDD-Frequenzband mittels einer TDD-basierten Teilnehmerstation sowie eine entsprechende Teilnehmerstation und eine entsprechende Netzeinrichtung.

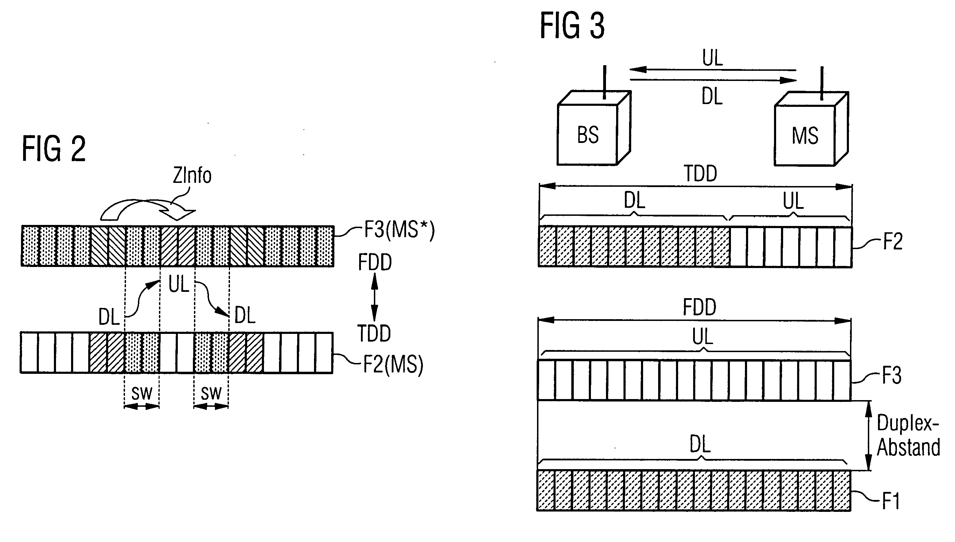

Im technischen Gebiet der Telekommunikation gibt es für die Übertragung von Daten in Funkkommunikationssystemen, wie z.B. in Mobilfunksystemen, zwei grundlegende Duplex-Technologien, TDD (Time Division Duplex) und FDD (Frequency Division Duplex). Bei TDD erfolgt eine Aufteilung zu übertragender Daten zwischen einer Teilnehmerstation MS, z. B einer Mobilstation, und einer netzseitigen Zugangsstation BS, z.B. einer Basisstation, im Zeitbereich statt, wobei der Zeitbereich wiederum z. B. im Falle von TDMA (Time Division Multiple Access) auf Zeitschlitze aufgeteilt werden kann, wobei zur Übertragung eine Frequenz eines festen Frequenzbandes F2 sowohl für die Abwärts- als auch Aufwärtsrichtung verwendet wird, wie dies aus Figur 3 ersichtlich ist. In einem Übertragungsrahmen findet dabei eine Unterteilung in Zeitschlitze statt, welche für eine Abwärtsverbindung DL (schraffiert dargestellt) von der Zugangsstation BS zu der Teilnehmerstation MS reserviert sind, und in Zeitschlitze, welche für eine Übertragung in Aufwärtsrichtung UL von der Teilnehmerstation MS zu der Zugangsstation BS reserviert sind. Bei FDD wird eine erste Frequenz eines ersten Frequenzbandes F1 für Übertragungen in Aufwärtsrichtung (Uplink oder reverse link) verwendet und eine zweite Frequenz eines zweiten Frequenzbandes F3 für Übertragungen in Abwärtsrichtung (Downlink oder forward link) verwendet. Die beiden Frequenzbänder F1, F3 sind zur Vermeidung von wechselseitigen Störungen und Interferenzen zueinander um einen Duplex-Abstand beabstandet.

Derzeitige Übertragungssysteme basieren entweder auf der FDD-Technologie oder auf der TDD-Technologie. Im Allgemeinen sind die beiden Technologien nicht zueinander kompatibel. Beispielsweise sind ein Empfänger bzw. ein Sender, welche auf FDD beruhen, nicht in der Lage, Signale zu empfangen bzw. zu senden, welche auf TDD beruhen. Ein Zusammenwirken der beiden Systeme ist bei derzeitigen Ausführungsformen nicht möglich. Existent ist lediglich ein Kommunikationssystem, in welchem beide Technologien parallel zueinander implementiert sind, wobei eine Interaktion zwischen diesen beiden Technologien vermieden wird und ein Datenaustausch nur über höhere Protokollstapel durchgeführt wird.

GB 2 398 455 A beschreibt einen TDD-Betrieb in einem FDD-Band. Dabei werden zum Übertragen von Daten und Signalisierungen anstelle eines einzelnen TDD-Frequenzbandes ein erstes und ein zweites FDD-Frequenzband verwendet, welche um einen Duplex-Abstand zueinander beabstandet sind. In dem ersten FDD-Frequenzband, das bei einem FDD-Betrieb für FDD-Aufwärtsverbindungen vorgesehen ist, werden Zeitschlitze gemäß TDMA eingerichtet, wobei ein Teil der Zeitschlitze im TDD-Betrieb für Abwärtsverbindungen und ein anderer Teil für Aufwärtsverbindungen verwendet werden. Eine Teilnehmerstation, welche in der Lage ist, beide Frequenzbänder parallel zueinander (zeitgleich) zu verwenden, verwendet außerdem das zweite FDD-Frequenzband, welches im FDD-Betrieb für FDD-Abwärtsverbindungen vorgesehen ist, für Übertragungen in Abwärtsrichtung im TDD-Betrieb. Aufwärtsverbindungen im TDD-Betrieb werden im zweiten FDD-Frequenzband wegen Interferenz benachbarter Kanäle von FDD-Basisstationen nicht verwendet.

Die Aufgabe der Erfindung besteht darin, ein Verfahren zum Übertragen von Daten und/oder Signalisierungen über eine Funkschnittstelle in einem Funkkommunikationssystem über zumindest ein FDD-Frequenzband mittels einer TDD-basierten Teilnehmerstation weiter zu verbessern. Außerdem sollen eine Teilnehmerstation und eine Netzeinrichtung zur Unterstützung eines solchen Verfahrens vorgeschlagen werden.

Diese Aufgabe wird gelöst durch das Verfahren sowie durch die Teilnehmerstation und durch die Netzeinrichtung gemäß den unabhängigen Ansprüchen. Vorteilhafte Ausgestaltungen sind Gegenstand abhängiger Ansprüche.

Bei einem erfindungsgemäßen Verfahren zum Übertragen von Daten und/oder Signalisierungen über eine Funkschnittstelle in einem Funkkommunikationssystem über zumindest ein FDD-Frequenzband mittels einer Teilnehmerstation, wobei die Teilnehmerstation ausgelegt ist für TDD- und FDD-Betrieb, werden für die Teilnehmerstation sowohl Ressourcen im zumindest einen FDD-Frequenzband als auch in einem TDD-Frequenzband allokiert und das Übertragen von Daten und/oder Signalisierungen wird wahlweise über die im zumindest einen FDD-Frequenzband allokierten Ressourcen oder die im TDD-Frequenzband allokierten Ressourcen durchgeführt.

Bevorzugt wird innerhalb der Teilnehmerstation zwischen dem zumindest einen FDD-Frequenzband und dem TDD-Frequenzband geschaltet.

Beispielsweise wird dadurch entweder in dem zumindest einen FDD-Frequenzband oder in dem TDD-Frequenzband übertragen.

Vorteilhafter Weise wird in der Teilnehmerstation für im TDD-Frequenzband zu übertragende oder übertragene Daten und/oder Signalisierungen eine Datenverarbeitung mittels TDD-Komponenten und/oder TDD-Funktionen verwendet.

Es ist weiterhin von Vorteil, wenn in der Teilnehmerstation für in dem zumindest einen FDD-Frequenzband zu übertragende oder übertragene Daten und/oder Signalisierungen eine Datenverarbeitung mittels FDD-Komponenten und/oder FDD-Funktionen verwendet wird.

Gemäß einer Weiterbildung wird in der Teilnehmerstation für in dem zumindest einen FDD-Frequenzband zu übertragende oder übertragene Daten und/oder Signalisierungen eine Datenverarbeitung mittels TDD-Komponenten und/oder TDD-Funktionen verwendet.

Mit Vorteil wird das Übertragen von Daten und/oder Signalisierungen über die im zumindest einen FDD-Frequenzband (F3) allokierten Ressourcen mittels TDD-Komponenten und/oder TDD-Funktionen durchgeführt.

Durch die Erfindung können Daten und/oder Signalisierungen, die bei einem TDD-Betrieb der Teilnehmerstation gemäß Stand der Technik nur im TDD-Frequenzband übertragen werden können, unter Beibehaltung des TDD-Betriebs in dem zumindest einen FDD-Frequenzband übertragen werden.

Vorzugsweise ist ein Empfang mittels TDD-Komponenten und/oder TDD-Funktionen der Teilnehmerstation nur für einen Teil eines Übertragungsrahmens aktiv, wobei dies von netzseitigen Einrichtungen, insbesondere einer Basisstation, für Datenübertragungen im zumindest einen FDD-Frequenzband berücksichtigt wird.

Beispielsweise belegt die Basisstation Ressourcen im FDD-Frequenzband nur in dem Teil des Übertragungsrahmens, in dem kein Empfang mittels TDD-Komponenten und/oder TDD-Funktionen der Teilnehmerstation erfolgt.

Zwischen dem Übertragen von Daten und/oder Signalisierungen über Zeitschlitze im TDD-Frequenzband und dem Übertragen von Daten und/oder Signalisierungen über Zeitschlitze im FDD-Frequenzband werden Schaltzeitschlitze vorgesehen, während derer keine Datenübertragung stattfindet. Ist die Umschaltung zwischen dem FDD- bzw. TDD-Frequenzband und umgekehrt schnell genug, d.h. beispielsweise innerhalb von Bruchteilen eines Zeitschlitzes durchführbar, kann auf Schaltzeitschlitze verzichtet werden.

Die Ressourcen im TDD-Frequenzband werden bevorzugt für die Teilnehmerstation (MS) allokiert und die Ressourcen im FDD-Frequenzband werden bevorzugt für eine virtuelle Teilnehmerstation allokiert werden oder umgekehrt, beispielsweise falls das Netz eine Teilnehmerstation mit Doppelfunktion (TDD-Betrieb und FDD-Betrieb) nicht unterstützt, wobei die Teilnehmerstation gegenüber netzseitigen Komponenten als scheinbar zwei Stationen erscheint. Gemäß einer Weiterbildung einer solchen Ausführungsvariante versendet eine netzseitige Basisstation im Fall eines erforderlichen Frequenzschaltens zwischen dem TDD-Frequenzband und dem FDD-Frequenzband Daten über zeitlich beabstandete Zeitschlitze doppelt.

Vorteilhafter Weise wird durch die Teilnehmerstation ein erweitertes TDD mit schnellen Frequenzwechseln zwischen dem zumindest einen FDD-Frequenzband und dem TDD-Frequenzband verwendet, wobei ein TDD-Protokollstapel kompatibel zu einem FDD-Funksystem konfiguriert und im zumindest einen FDD-Frequenzband verwendet wird.

Die Teilnehmerstation ist dabei insbesondere mit dem erweiterten TDD-System ausgelegt, sich an einer netzseitigen FDD-Basisstation zu registrieren.
Bevorzugt wird vorrichtungsgemäß eine Teilnehmerstation, insbesondere eine Teilnehmerstation zum Durchführen eines solchen Verfahrens, zum Übertragen von Daten und/oder Signalisierungen über eine Funkschnittstelle in einem Funkkommunikationssystem über zumindest ein FDD-Frequenzband, wobei die Teilnehmerstation für TDD- und FDD-Betrieb ausgelegt ist. Erfindungsgemäß ist die Teilnehmerstation ausgelegt, sowohl Ressourcen im zumindest einen FDD-Frequenzband als auch in einem TDD-Frequenzband zu allokieren, und die Teilnehmerstation ist weiterhin ausgelegt zum Übertragen von Daten und/oder Signalisierungen wahlweise über die im zumindest einen FDD-Frequenzband allokierten Ressourcen oder die im TDD-Frequenzband allokierten Ressourcen.

Eine solche Teilnehmerstation ist insbesondere mit einem Empfänger und/oder Sender ausgestattet, welche zum Schalten zwischen dem zumindest einen FDD-Frequenzband und dem TDD-Frequenzband eingerichtet sind.

Eine Steuereinrichtung dient zum Zuordnen von übertragenen oder zu übertragenden der Daten und/oder Signalisierungen, wobei die Steuereinrichtung ausgelegt ist, die Daten abhängig von dem verwendeten oder zu verwendenden FDD-Frequenzband oder TDD-Frequenzband mittels FDD-Komponenten und/oder FDD-Funktionen eines FDD-Systems oder mittels der TDD-Komponenten und/oder TDD-Funktionen eines TDD-Systems in der Teilnehmerstation zu verarbeiten.

Die Steuereinrichtung oder eine weitere Steuereinrichtung dient zum Allokieren von Ressourcen auf wahlweise dem zumindest einen FDD-Frequenzband und/oder dem TDD-Frequenzband.

Das heißt, die Teilnehmerstation kann sowohl über das zumindest eine FDD-Frequenzband als auch über das TDD-Frequenzband kommunizieren und wählt beispielsweise selbst je nach Bedarf zumindest ein Frequenzband aus.

Weiterhin ist eine erfindungsgemäße Netzeinrichtung vorgesehen, mittels derer die Durchführung des erfindungsgemäßen Verfahrens ermöglicht wird. Insbesondere können entsprechende Mittel vorgesehen sein, die der Teilnehmerstation oder der Teilnehmerstation und der virtuellen Teilnehmerstation sowohl Ressourcen im zumindest einen FDD-Frequenzband als auch im TDD-Frequenzband allokieren.

Die erfindungsgemäße Teilnehmerstation und die erfindungsgemäße Netzeinrichtung weisen jeweils alle Merkmale auf, die zur Durchführung des erfindungsgemäßen Verfahrens benötigt werden. Insbesondere können jeweils entsprechende Mittel zur Durchführung der einzelnen Verfahrensschritte oder Verfahrensvarianten vorgesehen sein.

Ein Ausführungsbeispiel wird nachfolgend anhand der Zeichnungen näher erläutert. Es zeigen:
- Fig. 1: eine schematische Darstellung von Einrichtungen eines beispielhaften Mobilfunksystems, welche unter Verwendung sowohl eines TDD-Frequenzbandes als auch zweier FDD-Frequenzbänder miteinander kommunizieren,
- Fig. 2: eine beispielhafte Ressourcenzuteilung bei Einsatz eines virtuellen Teilnehmers und
- Fig. 3: eine Ressourcenzuteilung gemäß dem Stand der Technik.

Gleiche Bezugszeichen in den Figuren bezeichnen gleiche Gegenstände.

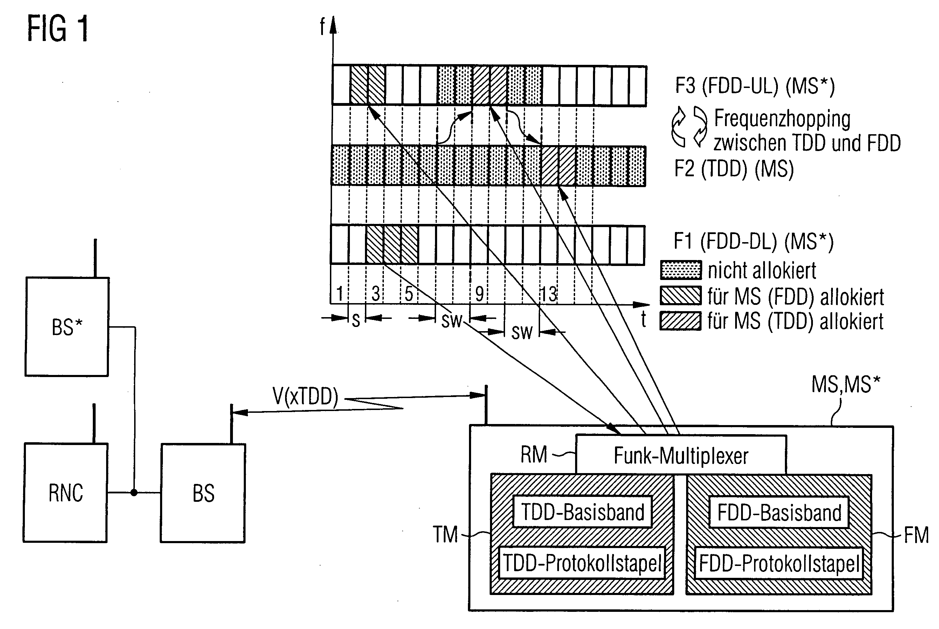

Fig. 1 zeigt als netzseitige Komponenten eines beispielhaften Mobilfunksystems eine Einrichtung zum Zuweisen von Funk-Ressourcen in Form einer Netzsteuereinrichtung RNC, welche mehrere Basisstationen BS, BS* als Zugangseinrichtungen verwaltet. Über die Basisstationen BS, BS* können Kommunikationsverbindungen über eine Funkschnittstelle V zu Teilnehmerstationen MS unter Verwendung von TDD (Time Division Duplex/Duplex-Zeitschlitz-Zuweisung) und FDD (Frequency Division Duplex/Duplex-Frequenz-Aufteilung) aufgebaut werden. Prinzipiell ist das Prinzip auf beliebige Kommunikationssysteme übertragbar, sofern die Verwendung von TDD und FDD unterstützt und die netzseitigen und/oder teilnehmerseitigen Stationen für eine entsprechende Verfahrensweise geeignet sind. Insbesondere sind unter dem Begriff Teilnehmerstation MS neben üblichen mobilen Endgeräten auch stationäre Endgeräte zu verstehen, welche eine Kommunikation entsprechend einer in einem jeweiligen Kommunikationssystem zugrunde liegenden Technologie unterstützen. Der Begriff Teilnehmerstation dient lediglich zur Unterscheidung einer von einem Teilnehmer eines Kommunikationssystems verwendeten Station gegenüber netzseitigen Stationen und Einrichtungen.

Die Teilnehmerstation MS umfasst eine Vielzahl üblicher Komponenten, wobei für die bevorzugte Verfahrensweise ein Funk-Multiplexer RM bereitgestellt ist. Der Funk-Multiplexer kann insbesondere durch eine bereits existierende Prozessoreinrichtung und weitere Komponenten wie eine Hochfrequenz-Schnittstelle, Analog/Digital-Wandler, Digital/Analog-Wandler etc. und durch eine entsprechende Programmierung ausgestaltet werden. Auch die Umsetzung durch eine eigenständige Komponente, welche gegebenenfalls weitere Funktionen übernimmt, ist prinzipiell möglich. Der Funk-Multiplexer RM dient dazu, innerhalb der Teilnehmerstation MS eine Verwaltung der verfügbaren Technologien TDD und FDD vorzunehmen. Ermöglicht wird der Betrieb der Teilnehmerstation sowohl mit TDD als auch alternativ oder zusätzlich mit FDD. Beispielsweise wird als Hauptbetriebsart FM die FDD-Technologie mit FDD-Komponenten und FDD-Funktionen, das heißt mit einem entsprechenden FDD-Basisband und einem FDD-Protokollstapel (protocol stack) angesteuert. Als eine zweite Betriebsart TM wird TDD mit TDD-Komponenten und TDD-Funktionen, das heißt mit einem zugeordneten TDD-Basisband und einem entsprechenden TDD-Protokollstapel verwendet. Außerdem bewirkt der Funk-Multiplexer RM eine entsprechende Verwaltung durch netzseitige Komponenten.

Ziel ist das Bereitstellen eines erweiterten TDD-Systems xTDD, das schnelles Frequenzspringen (frequency hopping) zwischen Frequenzen aus einem ersten und einem zweiten FDD-Frequenzband F1, F3 eines FDD-Systems und aus einem TDD-Frequenzband F2 eines TDD-Systems ermöglicht. Sofern die Teilnehmerstation MS nur einen einzelnen Empfänger bzw. einen einzelnen Sender aufweist, müssen diese in der Lage sein, zwischen zwei Duplex-Frequenzen aus den Duplex-FDD-Frequenzbändern F1, F3 des FDD-Systems und einer Frequenz aus dem TDD-Frequenzband F2 des TDD-Systems umzuschalten. Die Frequenzen sind der Teilnehmerstation MS zugewiesen, das heißt für die Teilnehmerstation allokiert. Um eine Kommunikation zwischen dem FDD-System und dem derart erweiterten TDD-System xTDD zu unterstützen, ist die Teilnehmerstation MS bzw. deren Funk-Multiplexer RM so eingerichtet, dass das erweiterte TDD-basierte System xTDD den Protokollstapel des FDD-Systems kennt und dass das FDD-basierte System das erweiterte TDD-System xTDD kennt und seine Kanalzuweisungen ändern kann.

Über die Funkschnittstelle V empfangene Daten werden von dem Funk-Multiplexer RM bzw. einer entsprechend ausgestalteten Steuereinrichtung an die jeweils für diese Daten geeignete Basisbandeinheit mit dem TDD-Basisband oder dem FDD-Basisband übergeben, wobei die entsprechende Basisbandeinheit die Daten zur Verarbeitung an den zugehörigen Protokollstapel übergibt. Ermöglicht wird insbesondere nicht nur das Abhören und Verarbeiten von Daten aus Kontrollkanälen sondern auch die Verwendung von Datenkanälen der verschiedenen Systeme zum Senden und/oder Empfangen von Daten, wodurch eine deutlich verbesserte spektrale Ausnutzung erzielt wird.

Bei der Datenverarbeitung wird vorzugsweise das Verarbeitungsverfahren des jeweiligen Basisbandes verwendet, über welches die Daten empfangen wurden oder zu senden sind. Prinzipiell vorteilhaft umsetzbar sind Lösungen, bei denen nach einer Allokation, d.h. Zuweisung und Belegung der Ressourcen das FDD-System auch auf einer Frequenz des TDD-Frequenzbandes F2 sein eigenes FDD-spezifisches Verarbeitungsverfahren einsetzen kann und/oder das TDD-System für Übertragungen auf Frequenzen der FDD-Frequenzbänder F1, F3 das TDD-spezifische Verarbeitungsverfahren einsetzen kann. Gegebenenfalls sind dabei Anforderungen an Spektrumsmasken etc. zu berücksichtigen.

In Verbindung mit dem Anmelden der Teilnehmerstation MS an den netzseitigen Komponenten über die Basisstation BS können verschiedene Verfahren verwendet werden, um die bevorzugte Funktionalität der verbesserten Ausnutzung der Übertragungstechniken gemäß TDD und FDD zu nutzen. Wenn die Teilnehmerstation MS den netzseitigen Komponenten ihre diesbezügliche Fähigkeit signalisiert, kann die Netzsteuereinrichtung RNC eine entsprechende Zuweisung von sowohl Zeitschlitzen und einer Frequenz des TDD-Frequenzbandes F2 als auch zusätzlich von Ressourcen der FDD-Frequenzbänder F1, F3 für die Teilnehmerstation MS vornehmen. Insbesondere kann eine solche Zuweisung von Ressourcen in den verschiedenen Frequenzbändern F1, F2, F3 durch die Netzsteuereinrichtung RNC auch abhängig von einer momentanen Netzauslastung festgelegt werden oder während des laufenden Betriebs geändert werden.

Fig. 1 zeigt die drei beispielhaften Frequenzbänder F1, F2, F3 eines verfügbaren Frequenzbereichs f, welche für Datenübertragungen zwischen der Basisstation BS und der Teilnehmerstation MS verwendet werden können. Beispielhaft wird dabei von dem System der Teilnehmerstation MS eine Frequenz des TDD-Frequenzbandes F2 zugewiesen. Je eine Frequenz aus beiden Duplex-FDD-Frequenzbändern F1, F3 werden einer virtuellen Teilnehmerstation MS* zugewiesen. Bei der Teilnehmerstation MS und der virtuellen Teilnehmerstation MS* handelt es sich um ein und dasselbe Gerät, das lediglich gegenüber den netzseitigen Einrichtungen als zwei eigenständige Teilnehmerstationen MS, MS* erscheint. Sofern die zuständigen netzseitigen Stationen auch eine Teilnehmerstation MS mit einer entsprechenden Doppelfunktionalität für den Zugriff auf zwei Kommunikationssysteme TDD, FDD verwalten können, kann auf das Verwenden einer virtuellen Teilnehmerstation verzichtet werden und alle drei Frequenzen aus den drei Frequenzbändern F1, F2, F3 werden der Teilnehmerstation MS zugewiesen.

Die Frequenzbänder F1, F2, F3 können jeweils einzeln zuweisbare, in Bezug auf die Bandbreite des jeweiligen Frequenzbandes schmalbandige Frequenzträger aufweisen. Beispielsweise handelt es sich beim Verwenden von OFDM (Orthogonal Frequency Division Multiple Access) bei den Frequenzträgern um so genannte Subträger. Das Zuweisen einer Frequenz entspricht dann dem Zuweisen eines Frequenzträgers. Selbstverständlich kann alternativ auch eine Übertragung unter Ausnutzung der jeweiligen gesamten Bandbreite der Frequenzbänder F1, F2, F3 erfolgen. In diesem Fall wird der Teilnehmerstation MS und/oder der virtuellen Teilnehmerstation MS* für eine Übertragung jeweils das ganze Frequenzband zugewiesen.

Dargestellt ist ein zeitlicher Ablauf mit einer Vielzahl aufeinander folgender Zeitschlitze s, welche in üblicher Art und Weise gemäß den Vorgaben des TDD als Zeitschlitze über die Zeit t hinweg eingerichtet und zugewiesen werden. Die erste Frequenz aus dem ersten FDD-Frequenzband F1 soll dabei beispielsweise für Übertragungen in Abwärtsrichtung FDD-DL zugewiesen sein und die zweite Frequenz aus dem zweiten FDD-Frequenzband F3 soll für Übertragungen von Daten in Aufwärtsrichtung FDD-UL vorgesehen sein.

Bei der lediglich beispielhaften zeitlichen Übertragungsabfolge von Daten und/oder Signalisierungen sendet die Teilnehmerstation MS als virtuelle Teilnehmerstation MS* mittels ihrer Hauptbetriebsart FM, das heißt dem FDD-System im ersten und im zweiten Zeitschlitz in Aufwärtsrichtung zu der Basisstation BS. Außerdem sendet die Teilnehmerstation MS als virtuelle Teilnehmerstation MS* mittels ihrer zweiten Betriebsart TM, das heißt mit ihrem TDD-System in Aufwärtsrichtung während des neunten und des zehnten Zeitschlitzes, wobei die Teilnehmerstation MS, MS* dafür zwar ihre Systemkomponenten für die TDD-Betriebsart zur Datenbereitstellungen verwendet, die Übertragung jedoch über die zweite Frequenz des zweiten FDD-Frequenzbandes F3 durchführt. Außerdem empfängt die Teilnehmerstation MS als virtuelle Teilnehmerstation MS* während des dritten bis fünften Zeitschlitzes Daten in Abwärtsrichtung über die erste Frequenz des ersten FDD-Frequenzbandes F1, wobei die derart empfangenen Daten in der Teilnehmerstation MS, MS* mittels der Hauptbetriebsart FM und den Komponenten des integrierten FDD-Systems verarbeitet werden. Zu einem späteren Zeitpunkt während des dreizehnten und des vierzehnten Zeitschlitzes empfängt die Teilnehmerstation MS außerdem Daten in Abwärtsrichtung auf der Frequenz des TDD-Frequenzbandes F2. Diese Daten werden entsprechend mittels der zweiten Betriebsart TM durch das TDD-System der Teilnehmerstation MS verarbeitet. Während der übrigen Zeitschlitze verwendet die Teilnehmerstation MS das TDD-Frequenzband F2 nicht, da die übrigen Zeitschlitze des TDD-Frequenzbandes F2 der Teilnehmerstation MS nicht zugewiesen worden sind. Ersichtlich ist somit eine Ausführungsform, bei welcher die Teilnehmerstation MS nicht nur ihr zugewiesene Zeitschlitze in dem TDD-Frequenzband F2 verwenden kann, sondern zur Erhöhung des Datendurchsatzes als virtuelle Teilnehmerstation zusätzlich Zeitschlitze bzw. Ressourcen in den FDD-Frequenzbändern F1, F3 des FDD-Systems allokieren und verwenden kann.

Wenn die Teilnehmerstation MS für Übertragungen, welche durch ihr TDD-System initiiert werden, vom TDD-Frequenzband F2 in eines der FDD-Frequenzbänder F1, F3 wechselt, wie im Falle der dargestellten Übertragung während des neunten und des zehnten Zeitschlitzes, können Schutzperioden bzw. Schaltzeitschlitze sw vorgesehen werden, in welchen die gesamte Teilnehmerstation MS, MS* oder deren TDD-System inaktiv bleibt. Dies ist insbesondere für Teilnehmerstationen MS, MS* sinnvoll, welche keine ausreichend kurze Schaltzeit zwischen verschiedenen Frequenzbändern F1, F2, F3 vorsehen, so dass ansonsten während eines Umschaltens die Gefahr eines Datenverlustes bestehen würde.

Für den Fall, dass die netzseitigen Komponenten nicht unterstützen, dass die Teilnehmerstation Ressourcen sowohl im TDD-Frequenzband F2 als auch in den FDD-Frequenzbändern F1, F3 allokiert, kann die Teilnehmerstation MS, wie in Figur 1 dargestellt, sich auch zweifach bei den netzseitigen Komponenten anmelden, einmal als Teilnehmerstation MS des TDD-Systems und zusätzlich ein weiteres Mal parallel dazu als eine das FDD-System unterstützende Teilnehmerstation MS*. In diesem Fall würde aus netzseitiger Sicht die Anmeldung zweier voneinander unabhängiger Teilnehmerstationen MS, MS* zu verwalten sein, wobei die eine dieser Teilnehmerstationen MS eine Frequenz und Zeitschlitze aus dem TDD-Frequenzband F2 zugewiesen bekommen würde, während der vermeintlich anderen Teilnehmerstation MS* Ressourcen in den FDD-Frequenzbändern F1, F3 zugewiesen werden würden. Aus Sicht der Teilnehmerstation MS, MS* tritt diese gegenüber den netzseitigen Komponenten als eine tatsächliche und als eine virtuelle Teilnehmerstation auf und kann Ressourcen sowohl des TDD-Systems als auch des FDD-Systems nutzen.

Netzseitig kann die Zusammenführung von Daten, welche über einerseits die FDD-Frequenzbänder F1, F3 und andererseits das TDD-Frequenzband F2 übertragen wurden auf verschiedene Art und Weise durchgeführt werden. Gemäß einer ersten beispielhaften Ausführungsform wird an der Basisstation BS die Verarbeitung der physikalischen Übertragungsschicht abgeschlossen. Dann sind übertragene Pakete, z.B. im Falle von IP (Internet Protokoll) basierenden Übertragungsmechanismen unabhängige IP-Pakete vorhanden, die individuell mit Ziel- und Quelladresse versehen sind und somit unabhängig im Netz geroutet werden können. Die einzige Voraussetzung ist bei dieser Ausführungsform, dass alle Subpakete über die gleiche Verbindung übertragen werden. Wenn nicht, wird eine erweiterte MAC ID (Media Access Control Identification Number / Medienzugriffs-Identifikationsnummer) bzw. ein Sequenzheader (Sequenzkopfabschnitt) benötigt.

Gemäß einer anderen beispielhaften Ausführungsform werden in der Steuereinrichtung RNC zur Verwaltung der Netzressourcen Datenpakete segmentiert bzw. wiederhergestellt. Auch dabei könnten mit Sequenznummern Subpakete zu z.B. IP Paketen reassembliert werden. Auch heute werden bereits Sequenznummern vergeben, um z.B. im Falle von ARQ (Automatic Repeat Request / automatische Wiederholungsanforderung) eine Paketwiederholung zu steuern.

Die Erfindung ermöglicht somit, dass Daten, beispielsweise eines Dienstes, sowohl über die FDD-Frequenzbänder F1, F3 als auch über das TDD-Frequenzband F2 übertragen werden. Insbesondere kann eine mit TDD betriebene Teilnehmerstation zusätzlich zum TDD-Frequenzband F2 auch die FDD-Frequenzbänder F1, F3 für ihre TDD basierten Datenübertragungen nutzen, wie dies beispielhaft für die Zeitschlitze 9 und 10 in Figur 1 dargestellt ist. Übertragen wird somit wahlweise in einem der Frequenzbänder F1, F2, F3.

Eine Funktionalität als virtuelle Teilnehmerstation MS* kann auch bei Teilnehmerstationen eingesetzt werden, welche kein ausreichend schnelles Umschalten zwischen den Frequenzbändern F1, F2, F3 erlauben. In einem solchen Fall würde der Scheduler, das heißt die Planungsinstanz des FDD-Systems, die Schaltzeit bei der Allokation von Ressourcen berücksichtigen.

Falls bestimmte zeitliche Anforderungen des FDD-Protokolls dies nicht ermöglichen, können zu übertragende Daten aber auch einfach auf den entsprechenden Zeitschlitz kopiert werden, welchen die ansonsten zu langsam umschaltende Teilnehmerstation noch erreichen kann. Sicherheitshalber werden bei einer solchen Verfahrensweise die Daten dabei über zwei Ressourcen, das heißt doppelt, versendet.

Fig. 2 zeigt eine Ausführungsform, bei welcher die Umschaltung unter Verwendung von Schaltzeitschlitzen sw und unter Verwendung einer Anmeldung beim System in Form der Teilnehmerstation MS für den TDD-Betrieb und der virtuellen Teilnehmerstation MS* für den FDD-Betrieb beispielhaft veranschaulicht ist. In Abwärtsrichtung findet beispielsweise eine Übertragung mittels des TDD-Frequenzbandes F2 während zweier Zeitschlitze statt. Diese beiden Zeitschlitze sind der virtuellen Teilnehmerstation im zweiten FDD-Frequenzband F3 zugewiesen. Während der Dauer der nächsten beiden Zeitschlitze, welche als Schaltschlitze sw verwendet werden, wechselt die Teilnehmerstation MS das Frequenzband vom TDD-Frequenzband F2 zum zweiten FDD-Frequenzband F3 und belegt dort nachfolgend als virtuelle Teilnehmerstation MS* die nächsten beiden Zeitschlitze, um Daten in Aufwärtsrichtung zu übertragen. Nachfolgend erfolgt wiederum ein Umschalten auf das TDD-Frequenzband F2 während zweier weiterer Schaltzeitschlitze sw, um daraufhin wiederum in Abwärtsrichtung Daten über das TDD-Frequenzband F2 während zweier weiterer Zeitschlitze als Teilnehmerstation MS zu empfangen. Diese beiden Zeitschlitze belegt die virtuelle Teilnehmerstation MS* wiederum im zweiten FDD-Frequenzband F3, wobei selbstverständlich von der virtuellen Teilnehmerstation MS* dort keine Daten übertragen werden. Durch eine solche Ausführungsform kann die Teilnehmerstation MS das zweite FDD-Frequenzband F3 zur Übertragung von Daten auch zu Zeitpunkten verwenden, zu denen in dem TDD-Frequenzband F2 keine Zeitschlitze für entsprechende Übertragungen zugewiesen sind. Entsprechend ist eine Erhöhung des Datendurchsatzes bzw. eine Verkürzung der Dauer einer Gesamtdatenmengen-Übertragung möglich.

Ermöglicht wird eine sehr variable Einsetzbarkeit einer Teilnehmerstation MS, welche mit verschiedenen Betriebsarten einsetzbar ist. Gemäß einer ersten Betriebsart kann das erweiterte TDD-System in einem typischen TDD-Spektrumband bzw. TDD-Frequenzband arbeiten und im FDD-System nur auf Übertragungen in Abwärtsrichtung hören, um über das FDD-System zusätzliche Steuerdaten oder zusätzliche Nutzdaten bzw. Teilnehmerdaten zu erhalten. Gemäß einer zweiten Betriebsart kann das erweiterte TDD-System in einem typischen TDD-Spektrumband arbeiten und im FDD-System auf Übertragungen in Abwärtsrichtung hören und die Aufwärtsrichtung des FDD-Systems teilweise verwenden, um Steuer- und/oder Teilnehmerdaten an das FDD-System zu senden. Gemäß einer dritten Betriebsart kann das TDD-System auch als ein Halbduplex-FDD-System ohne die Verwendung des TDD-Spektrumbandes arbeiten. Gemäß aller drei Betriebsarten wird eine enge Interaktion zwischen dem erweiterten TDD-System und dem FDD-System durch den Funk-Multiplexer RM unterstützt.

Ermöglicht wird dadurch, dass der Sendebetrieb bzw. der Empfangsbetrieb des TDD-Systems der Teilnehmerstation MS nur während eines Teils eines Übertragungsrahmens bzw. Funkrahmens aktiv ist. In diesem Fall ist es wichtig, dass die Komponenten bzw. Funktionalitäten des FDD-Systems in der Teilnehmerstation MS solche Beschränkungen kennen.

Vorteilhafterweise kann die Basisstation BS, welche FDD verwendet, eine solche Interaktion unterstützen, wenn sie die Zeitschlitze in Aufwärtsrichtung gemäß den Möglichkeiten des Empfängers des erweiterten TDD-Systems der Teilnehmerstation MS entsprechend zuweist. Falls der Sender oder Transceiver des erweiterten TDD-Systems der Teilnehmerstation MS ein schnelles Frequenzspringen bzw. eine schnelle Frequenzauswahl unterstützt, ist es möglich, gegebenenfalls sogar die Zeitschlitze zu verwenden, welche einem vor dem Frequenzwechsel zuletzt verwendeten Zeitschlitz unmittelbar folgen. Falls ein schnelles Frequenzspringen nicht unterstützt wird, weist die Basisstation BS der Teilnehmerstation MS Zeitschlitze nach einer geeigneten Anzahl von Schutz- bzw. Schaltzeitschlitzen sw zu, welche erforderlich sind, damit der Sender oder Transceiver der Teilnehmerstation MS umschalten und die entsprechende Frequenz einrichten kann.

Falls eine FDD-basierte Basisstation BS nicht in der Lage ist, geeignete Zeitschlitze zuzuweisen, wird ein virtueller Teilnehmer bzw. eine virtuelle Teilnehmerstation MS* eingerichtet. Für einen solchen virtuellen Teilnehmer wird, wie z.B. in Figur 2 dargestellt, eine Zeitschlitzinformation ZInfo zu benötigten Zeitschlitzen kopiert, welche zeitlich weit genug entfernt liegen, um die Anforderungen einer Frequenzschaltzeit entsprechend der Frequenzsprungverzögerung erfüllen. Dabei wird in Kauf genommen, dass der reale Teilnehmer bzw. die reale Teilnehmerstation MS hinter dem virtuellen Teilnehmer bzw. hinter der virtuellen Teilnehmerstation MS* die Bandbreite zweifach beansprucht.

Falls die physikalische Schicht (layer) schnelles Frequenzspringen des erweiterten TDD-Systems unterstützt, werden die höheren Schichten mit einem Protokollstapel neu konfiguriert, welcher zu dem FDD-Funksystem kompatibel ist. Daraufhin ist das erweiterte TDD-System in der Lage, eine Übertragungsverbindung über das FDD-Funksystem einzurichten, beispielsweise für die Registrierung des TDD-Terminals bzw. der erweiterten TDD-Teilnehmerstation bei der FDD-Basisstation BS. Vorteilhafterweise ist es mit einer solchen Technik möglich, TDD-Funksysteme zu verwenden, welche mit einer FDD-Basisstation verbunden werden. Üblicherweise wird TDD in beschränkten Umgebungen wie Innenräumen oder so genannten Hotspot-Umgebungen verwendet. Durch die vorgeschlagene Verfahrensweise wird es möglich, dass gleiche Funksystem z. B. auch zusammen mit einem mobilen Funkkommunikationssystem für Außenanwendungen zu verwenden. Auch eine hybride TDD/FDD-Signalisierungs- und Datenübertragung wird ermöglicht. Vorteilhafterweise können in einem solchen System auch Übergänge (handover) zwischen TDD und FDD unterstützt werden. Eine Lösung mit schnellen Aufwärtsverbindungen wird unterstützt, wenn das TDD-System in der Lage ist, die verwendeten Frequenzen zu ändern, wobei die Senderichtung und die Empfangsrichtung schnell gewechselt werden.

Vorteilhafterweise laufen in der Teilnehmerstation MS beide Protokollstapel, das heißt der TDD-Protokollstapel und der FDD-Protokollstapel gleichzeitig, so dass sich die Teilnehmerstation MS jederzeit hörend in den momentan gesendeten Datenstrom der zugeordneten Basisstation BS einklinken kann. Dabei wird eine Trennung der Funktionalitäten zwischen der lediglich beispielhaft und veranschaulichend als Funk-Multiplexer RM bezeichneten Einheit und den Protokollstapeln vorgesehen. Dadurch ist die Teilnehmerstation MS jederzeit in der Lage, an der richtigen Stelle auf empfangene Datenwerte zuzugreifen bzw. an der richtigen Stelle zu sendende Datenwerte zu übertragen.

Vorteilhaft ist auch ein kombinierter Einsatz, wenn aus Sicht des FDD-Systems die zusätzliche Ressource des TDD-Systems mitverwendbar ist. Dann können vom FDD-System zusätzlich zu bisher alleinig verwendbaren FDD-Zeitschlitzen auch Zeitschlitze im TDD-Frequenzband des TDD-Systems allokiert werden. Dadurch ergibt sich eine sehr flexible Nutzung des TDD-Frequenzbandes, welches dann beispielsweise als Daten-Booster einsetzbar ist. Als Protokoll wird im FDD-Fall der FDD-Protokollstapel und im TDD-Fall der TDD-Protokollstapel verwendet. Gegebenenfalls erfolgt eine gemischte Ansteuerung, bei der auf Ressourcen in dem jeweiligen Frequenzband mit den diesem Frequenzband zugeordneten Systemsignalisierungen zugegriffen wird, obwohl die übertragenen Daten eigentlich dem anderen System zugeordnet sind.

Während bei dem dargestellten Ausführungsbeispiel zwei getrennte Betriebsarten für einerseits FDD und andererseits TDD beschrieben sind, besteht prinzipiell auch die Möglichkeit, Teile der Komponenten und Algorithmen dieser Systeme soweit möglich gemeinsam zu verwenden und dadurch ein Mischsystem zu erzeugen, welches einerseits TDD- und andererseits FDD-Funktionalitäten bereitstellt.

## Patentansprüche

1. Verfahren zum Übertragen von Daten und/oder Signalisierungen über eine Funkschnittstelle (V) in einem Funkkommunikationssystem über zumindest ein FDD-Frequenzband (F1, F3) mittels einer Teilnehmerstation (MS, MS*), wobei die Teilnehmerstation ausgelegt ist für TDD- und FDD-Betrieb,
**dadurch gekennzeichnet, dass**
- für die Teilnehmerstation (MS, MS*) sowohl Ressourcen im zumindest einen FDD-Frequenzband (F1, F3) als auch in einem TDD-Frequenzband (F2) allokiert werden und
- das Übertragen von Daten und/oder Signalisierungen wahlweise über die im zumindest einen FDD-Frequenzband (F3) allokierten Ressourcen oder die im TDD-Frequenzband (F2) allokierten Ressourcen durchgeführt wird.

2. Verfahren nach Anspruch 1, bei dem innerhalb der Teilnehmerstation (MS, MS*) zwischen dem zumindest einen FDD-Frequenzband (F1, F3) und dem TDD-Frequenzband (F2) geschaltet wird.

3. Verfahren nach Anspruch 1 oder 2, bei dem in der Teilnehmerstation (MS, MS*) für im TDD-Frequenzband (F2) zu übertragende oder übertragene Daten und/oder Signalisierungen eine Datenverarbeitung mittels TDD-Komponenten und/oder TDD-Funktionen verwendet wird.

4. Verfahren nach Anspruch 1, 2 oder 3, bei dem in der Teilnehmerstation (MS, MS*) für im zumindest einen FDD-Frequenzband (F1, F3) zu übertragende oder übertragene Daten und/oder Signalisierungen eine Datenverarbeitung mittels FDD-Komponenten und/oder FDD-Funktionen verwendet wird.

5. Verfahren nach Anspruch 1, 2, 3 oder 4, bei dem in der Teilnehmerstation (MS, MS*) für im zumindest einen FDD-Frequenzband (F1, F3) zu übertragende oder übertragene Daten eine Datenverarbeitung mittels TDD-Komponenten und/oder TDD-Funktionen verwendet wird.

6. Verfahren nach einem vorstehenden Anspruch, bei dem das Übertragen von Daten und/oder Signalisierungen über die im zumindest einen FDD-Frequenzband (F3) allokierten Ressourcen mittels TDD-Komponenten und/oder TDD-Funktionen durchgeführt wird.

7. Verfahren nach einem vorstehenden Anspruch, bei dem ein Empfang mittels TDD-Komponenten und/oder TDD-Funktionen der Teilnehmerstation nur für einen Teil eines Übertragungsrahmens aktiv ist, wobei dies von netzseitigen Einrichtungen, insbesondere einer Basisstation (BS), für Datenübertragungen im FDD-Frequenzband (F1, F3) berücksichtigt wird.

8. Verfahren nach einem vorstehenden Anspruch, bei dem zwischen dem Übertragen von Daten und/oder Signalisierungen über Zeitschlitze (s) im TDD-Frequenzband (F2) und dem Übertragen von Daten und/oder Signalisierungen über Zeitschlitze im zumindest einen FDD-Frequenzband (F3) Schaltzeitschlitze (sw) vorgesehen werden, während derer keine Datenübertragung stattfindet.

9. Verfahren nach einem vorstehenden Anspruch, bei dem die Ressourcen im TDD-Frequenzband (F2) für die Teilnehmerstation (MS) allokiert werden und die Ressourcen im zumindest einen FDD-Frequenzband (F1, F3) für eine virtuelle Teilnehmerstation (MS*) allokiert werden oder umgekehrt, wobei die Teilnehmerstation gegenüber netzseitigen Komponenten als scheinbar zwei Stationen erscheint.

10. Verfahren nach Anspruch 9, bei dem eine netzseitige Basisstation im Fall eines erforderlichen Frequenzschaltens zwischen dem TDD-Frequenzband (F2) und dem zumindest einen FDD-Frequenzband (F3) Daten und/oder Signalisierungen über zeitlich beabstandete Zeitschlitze doppelt versendet.

11. Verfahren nach einem vorstehenden Anspruch, bei dem durch die Teilnehmerstation (MS, MS*) ein erweitertes TDD mit schnellen Frequenzwechseln zwischen dem zumindest einen FDD-Frequenzband und dem TDD-Frequenzband verwendet, wobei ein TDD-Protokollstapel kompatibel zu einem FDD-Funksystem konfiguriert und im zumindest einen FDD-Frequenzband (F3) verwendet wird.

12. Verfahren nach Anspruch 11, bei dem die Teilnehmerstation (MS, MS*) mit dem erweiterten TDD-System ausgelegt ist, sich an einer netzseitigen FDD-Basisstation (BS) zu registrieren.

13. Teilnehmerstation zum Übertragen von Daten und/oder Signalisierungen über eine Funkschnittstelle (V) in einem Funkkommunikationssystem über zumindest ein FDD-Frequenzband (F1, F3), wobei die Teilnehmerstation (MS, MS*) für TDD- und FDD-Betrieb ausgelegt ist,
**dadurch gekennzeichnet, dass**
- die Teilnehmerstation (MS, MS*) ausgelegt ist, sowohl Ressourcen im zumindest einen FDD-Frequenzband (F1, F3) als auch in einem TDD-Frequenzband (F2) zu allokieren und
- ausgelegt ist zum Übertragen von Daten und/oder Signalisierungen wahlweise über die im zumindest einen FDD-Frequenzband (F3) allokierten Ressourcen oder die im TDD-Frequenzband (F2) allokierten Ressourcen.

14. Netzeinrichtung in einem Funkkommunikationssystem mit Mitteln, die derart ausgebildet sind, dass sie das Durchführen eines Verfahrens nach einem der Ansprüche 1 bis 12 ermöglichen.
